# EUROPEAN PATENT APPLICATION

(11) **EP 1 404 030 A1**
(43) Date of publication of application: **31.03.2004**
(21) Application number: 02741339.2
(22) Date of filing: 26.06.2002
(51) Int. Cl.: H04B 1/707

(54) **CDMA RECEPTION APPARATUS AND ERROR CORRECTION CODE SYMBOL SOFT DECISION METHOD**

(30) Priority: 02.07.2001 JP 2001200708
(71) Applicant: Kawasaki Microelectronics, Inc., Chiba-shi, Chiba 261-8501 (JP)
(72) Inventor: TAKAYAMA, H, Kawasaki Microelectronics, Inc., Chiba-shi, Chiba 261-8501 (JP); KONDO, H., Kawasaki Microelectronics, Inc., Chiba-shi, Chiba 261-8501 (JP)
(74) Representative: Stebbing, Timothy Charles
(86) International application number: PCT/JP2002/006416
(87) International publication number: WO 2003/005596

(57) **Abstract**

Demodulated symbol data obtained by RAKE combining a multi path is subjected to a symbol soft decision, and at the same time, a reception state is detected from the demodulated symbol data. The demodulated symbol data after the symbol soft decision is delayed, and at the same time, an optimum mapping table is set based on the reception state detection result, whereby the demodulated symbol data after delayed and subjected to the symbol soft decision is again subjected to the symbol soft decision.

## Description

### Technical Field

The present invention relates to a CDMA receiver and an error correction code symbol soft decision method, and more particularly to a symbol soft decision technique for improving error correction code decoding gains.

### Background Art

In recent years, in fields of mobile phones and others such land-based mobile communications, and mobile satellite communications and others such mobile communications, in order to deal with a striking increase in demand therefor, a CDMA (Code Division Multiple Access) system is widely being used as a multiple access system in which a frequency can be used effectively.

The CDMA system is a communications system using a spread spectrum technique to set a different spreading code for each user, thereby achieving highly efficient usage of the frequency that can be shared by a plurality of users using the same broad band radio channel.

Data to be sent is multiplexed and sent from a base station. A CDMA receiver receives a transmission signal from the base station and, in synchronization with reception timing, de-spreads a receive signal with a spreading code assigned to the receive signal to demodulate the data.

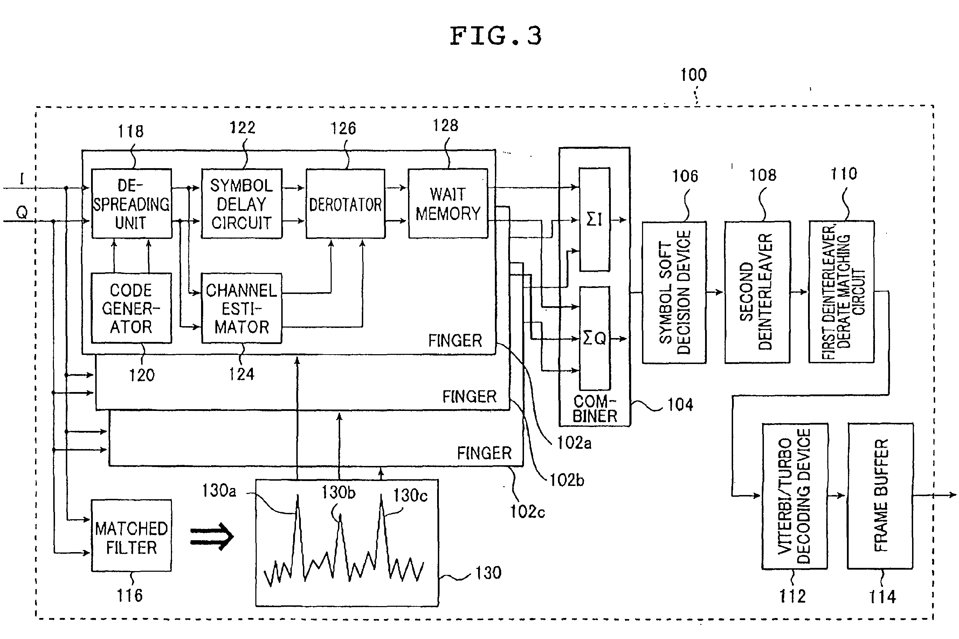

Fig. 3 is a block diagram showing an outline of a base band portion of a conventional CDMA receiver.

As shown in Fig. 3, a base band portion 100 includes a plurality of fingers 102a, 102b, and 102c, a combiner 104, a symbol soft decision device 106, a second deinterleaver 108, a first deinterleaver and a derate matching circuit 110, a Viterbi/turbo decoder 112, a frame buffer 114, and a matched filter 116.

The plurality of fingers 102a, 102b and 102c demodulate base band signals I and Q which are received by an antenna. The combiner 104 combines outputs from the fingers 102a, 102b and 102c. The symbol soft decision device 106 performs a soft decision on the signal combined by the combiner 104. The Viterbi/turbo decoder 112 performs error correction. The frame buffer 114 accumulates the decoded data. The matched filter 116 synchronizes the outputs from the fingers 102a, 102b and 102c at the time of the combination at the combiner 104.

The finger 102a (and similarly the fingers 102b and 102c as well) has an de-spreading device 118, a code generator 120, a symbol delay circuit 122, a channel estimator 124, an derotator 126, and a wait memory 128.

The de-spreading device 118 receives and de-spreads (demodulates) the signal in which the symbol is spread and sent by means of code multiplexing on the CDMA sending side, and thus obtains the original symbol. At this time, the same code as was used on the sending side is generated by the code generator 120, and this code is used to perform the de-spreading.

The channel estimator 124 uses pilot information to perform a channel estimation calculation. That is, the channel estimator 124 uses the received pilot channel, and detects a phase shift in the received symbol caused by the transmission. The symbol delay circuit 122 delays the data by an amount of time needed for the channel estimation by the channel estimator 124. The derotator 126 compensates the position of the symbol by an amount equal to the phase shift of symbol detected by the channel estimator 124.

Note that, electric waves from the sending side are reflected off buildings and others such obstacles before arriving on the receiving side, and thus received via a plurality of paths producing different arrival times. Therefore, as described above, the plurality of fingers 102a, 102b, and 102c corresponding to the plurality of paths are provided. Then, in order to operate each of the fingers 102a, 102b, and 102c in synchronization with the signal of each path, the matched filter 116 detects the beginning of the data from each path signal. For example, in a case where the matched filter 116 detects a correlation waveform as indicated by reference numeral 130, correlation peaks 130a, 130b, and 130c with the code are used as the synchronizing signals to operate the fingers 102a, 102b, and 102c, respectively. Further, in correspondence with each operation time, the data is stored in the wait memory 128, and the synchronization is established to perform the combination (RAKE combination) by the combiner 104.

The signal which was combined by the combiner 104 and thus became a multi-bit signal is inputted into the symbol soft decision device 106, and soft decision processing is performed. In the soft decision processing, the received signal is not decided using simply 0 and 1 as in a hard decision. Rather, the decision is made by means of a map (a mapping table) using threshold values at 8 levels, 16 levels, or the like to divide the signal values into a plurality of segmentalized levels, and thus the quality of the decoding can be improved.

Incidentally, on the sending side, in order to spread a burst error produced by phasing and the like, a first interleave processing for switching the sequence of the frames, and a second interleave processing for switching the sequence of consecutive data, are performed. In contrast, on the receiving side, the second deinterleaver 108, the first deinterleaver and the derate matching circuit 110 (the first deinterleaver in the circuit 110) perform the opposite processing (deinterleaving) from the processing that was performed on the sending side. In other words, the second deinterleaver 108 performs deinterleaving to switch the sequence of the consecutive data, then the first deinterleaver and the derate matching circuit 110 (the first deinterleaver of the circuit 110) perform the deinterleaving to switch the sequence of the frames, namely the sequence of the data and the sequence of the frames are switched, so that the data is returned to its original pattern.

Further, the derate matching circuit performs the derate matching processing, and the opposite of processing redundant bit insertion and bit thinning processing are performed to match the transfer rate used on the sending side, so that the data is returned to its original pattern.

Then, finally, the Viterbi/turbo decoder 112 performs error correction decoding, and the restored data is stored into the frame buffer 114.

As described above, in accordance with the conventional CDMA receiver, the RAKE-combined multi-bit data is soft-decided using the threshold values to achieve posterior circuit scale reduction, and are mapped to 3- to 4-bit data, the deinterleave and the error correction decoding are performed. However, the mapping table used at the time of the soft decision is fixed, so that the distribution of the data after the soft decision affects the decoding gains (error correction capacity), and more particularly, when the reception status is poor, there is a problem in that the decoding gains deteriorate.

### DISCLOSURE OF THE INVENTION

The present invention has been made in light of the conventional problems described above, and has an object to provide a CDMA receiver and an error correction code symbol soft decision method which are capable of improving decoding gains from an effective soft decision, while maintaining a compact size of the device, without increasing circuit scale.

In order to solve the above-mentioned problem, according to the present invention, there is provided a CDMA receiver for performing de-spreading of a signal received via multi-paths, and performing error correction on demodulated symbol data combined from receive symbols from each path, including:
reception status detection means for detecting a reception status based on the demodulated symbol data;
frame delay means for delaying the demodulated symbol data; and
a plurality of types of soft decision means for setting an optimum mapping table for the detected reception status, and performing symbol soft decisions on the demodulated symbol data.

Here, it is preferable that at least one of the soft decision means is provided before and after the frame delay means respectively, and the demodulated symbol data after soft-decided and delayed is soft decided again.

Further, it is preferable that the reception status detection means is dynamic range detection means for detecting a dynamic range of the demodulated symbol data. Furthermore, it is preferable that the reception status detection means detects the dynamic range per frame unit of the demodulated symbol data, and detects distribution per frame unit of the receive symbol data.

Further, it is preferable that the soft decision means sets the optimum mapping table for the reception status decided based on the detected distribution of the receive symbol data.

Further, according to the present invention, there is provided an error correction code symbol soft decision method used in a CDMA receiver, including:
performing a symbol soft decision on demodulated symbol data obtained by a RAKE combination of multi-paths, and detecting a reception status based on the demodulated symbol data; and
delaying the demodulated symbol data after subjected to the symbol soft decision, and also setting an optimum mapping table based on the detection result, and performing the symbol soft decision again on the demodulated symbol data after delayed and subjected to the symbol soft decision.

Here, it is preferable that the detection of the reception status is performed by detecting a dynamic range of the demodulated symbol data. Furthermore, it is preferable that the detection of the reception status is performed by detecting the dynamic range per frame unit of the demodulated symbol data and detecting distribution per frame unit of the receive symbol data.

Further, it is preferable that the optimum mapping table is set based on the reception status decided based on the detected distribution of the receive symbol data.

### BRIEF DESCRIPTION OF THE DRAWINGS

Fig. 1 is a block diagram showing an outline of an embodiment of a base band portion of a CDMA receiver according to the present invention;
Fig. 2 is a block diagram showing an outline structure of a soft decision unit of this embodiment;
Fig. 3 is a block diagram showing an outline of a base band portion of a conventional CDMA receiver; and
Fig. 4 is a schematic diagram showing a structure of a mapping table of this embodiment.

### BEST MODE FOR CARRYING OUT THE INVENTION

Hereinafter, detailed explanation is made regarding a CDMA receiver and an error correction code symbol soft decision method of the present invention, based on a preferred embodiment shown in the attached drawings.

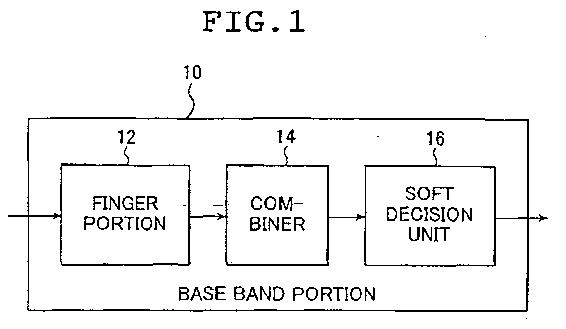

Fig. 1 is a block diagram showing an outline of an embodiment of a base band portion of a CDMA receiver according to the present invention.

A base band portion 10 forms a main body of the CDMA receiver, and in addition, the CDMA receiver has, for example, an antenna for receiving electric waves. In Fig. 1, the base band portion 10 is composed of a finger portion 12, a combiner 14, and a soft decision unit 16.

The finger portion 12 demodulates a symbol corresponding to each path of receive signals which reflect off buildings and others such obstructions and are received via a plurality of paths (multi-paths) arriving at different arrival times. The finger portion 12 is similar to a conventional art shown in Fig. 3, and has a plurality of fingers and a matched filter.

The combiner 14 is combination means for combining the symbols demodulated according to each multi-path by the finger portion 12, and is also similar to the conventional art shown in Fig. 3. Descriptions regarding those components which are similar to the conventional art are omitted.

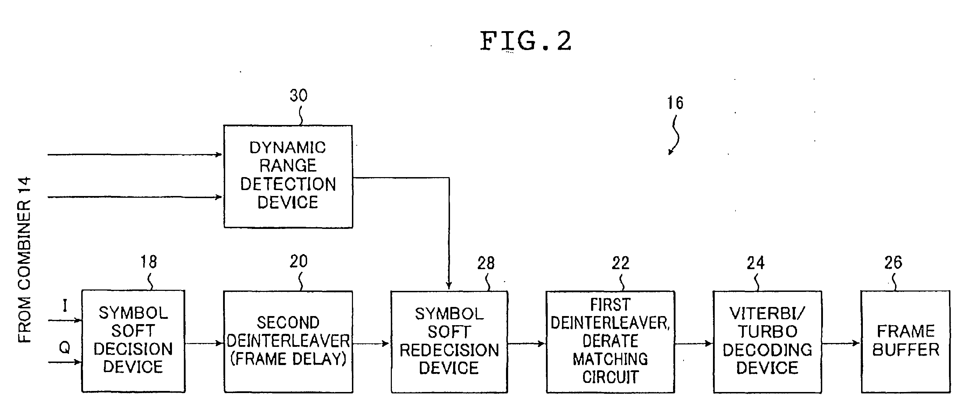

The soft decision unit 16 constitutes a characteristic of the present invention. Fig. 2 shows an outline structure of the soft decision unit 16.

As shown in Fig. 2, the soft decision unit 16 of this embodiment includes a symbol soft decision device 18, a second deinterleaver 20, a symbol soft redecision device 28, a first deinterleaver and a derate matching circuit 22, a Viterbi/turbo decoding device 24, a frame buffer 26, and a dynamic range detection device 30.

Other than the symbol soft redecision device 28 and a dynamic range detector 30, the structure is similar to the conventional structure shown in Fig. 3. Therefore, its descripltion is omitted.

The symbol soft redecision device 28 and the dynamic range detector 30 are the most characteristic portions of the CDMA receiver of the present invention. As shown in Fig. 2, the symbol soft redecision device 28 is provided between the second deinterleaver 20 and the first deinterleaver and the derate matching circuit 22. The second deinterleaver 20 is for performing deinterleaving between consecutive bits, and has a function as frame delay means.

The dynamic range detector 30 detects a dynamic range per frame unit of the demodulated symbol data of the receive signal, to thereby detect the distribution and the like of the receive symbols per frame unit.

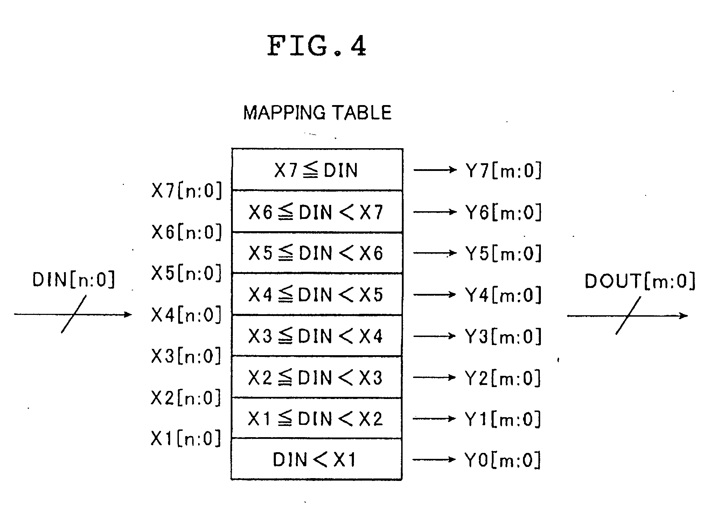

Then, as shown in Fig. 4, the symbol soft redecision device 28 sets a mapping table that is optimum for the reception status that was decided based on the detected distribution of the receive symbols, and performs the soft redecision of the demodulated symbol data. Fig. 4 is an example using threshold values X1 through X7 to map the symbols that were inputted into the symbol soft redecision device 28, into 8 levels.

Thus, one more soft decision circuit (symbol soft redecision device 28) is provided between the second deinterleaver 20 as the frame delay means and the first deinterleaver and the derate matching circuit 22. At the same time, the mapping table that was decided based on the distribution of the receive symbols as detected by the dynamic range detector 30 (reception status detection means) is set. As a result, a more reliable soft decision becomes possible.

That is, the reception status always changes. In response to the reception status, by setting the mapping table so as to break down the portion where the signal has a higher probability of existing, the information from that portion is given to a subsequent decoding device. Accordingly, the decoding characteristics can be improved and the decoding gains can be improved.

The structure thus provided with the plurality of soft decision devices serves as means for obtaining superior decoding gains in an error correction device. Further, since the mapping table can be provided individually per decoding algorithm, optimum mapping can be performed. Further, the multi-bit symbol data after the RAKE combination is compressed once into 3 - 4 bits information by the symbol soft decision device 18, thereby also enabling size-reduction of the device by reducing the capacity of the frame delay means (memory).

Hereinafter, the operation of this embodiment is described.

In Fig. 1, the finger portion 12 of the base band portion 10 demodulates the symbols of the receive signal from each multi-path, and the combiner 14 performs RAKE combination.

Further, as shown in Fig. 2, an output from the combiner 14 is inputted into the symbol soft decision device 18, and also inputted into the dynamic range detector 30.

The symbol soft decision device 18 performs the symbol soft decision on the demodulated symbol data that was inputted. As described above, the soft decision is different from a hard decision in which a certain threshold value is provided with respect to the size of the data and the threshold value serves as a boundary and 2 values are used to decide the data as 0 or as 1. In the soft decision, a plurality of the threshold values are set for each data level, and the data is decided not only in 2 levels of 0 and 1, but is also divided into a plurality of levels for decision. Accordingly, the values of the multi-bits can be expressed as values of a few bits.

The data which has undergone one soft decision by the symbol soft decision device 18 is inputted into the second deinterleaver 20, and the data interleaving between the consecutive bits is performed by the second deinterleaver 20. In order to guarantee time for the dynamic range detector 30 described below to perform the detection processing, the frame delay is performed, and the second deinterleaver 20 performs the function as the frame delay means.

On the other hand, the dynamic range detector 30 detects the dynamic range of the demodulated symbol data that was inputted from the combiner 14. By detecting the dynamic range, the distribution of the receive symbols is detected. In other words, the level of the demodulated symbol data is not uniformly distributed but is always fluctuating, so that the dynamic range is detected to learn approximately what level the data is distributed at. The mapping table obtained from the detection result is set in the symbol soft redecision device 28, and is used when performing the soft decision again. In other words, by further breaking down the place where the data is heavily distributed, the mapping table that is optimum for the reception status is set.

The symbol soft redecision device 28 thus uses the detection result from the dynamic range detector 30 to set the optimum mapping table for the reception status, and uses this mapping table to perform the soft decision again on the data that has been frame-delayed by the second deinterleaver 20.

The soft redecided data is deinterleaved and undergoes other processing as decided by 3GPP (3rd Generation Partnership Project) in the first deinterleaver and the derate matching circuit 22, and undergoes error correction decoding by the Viterbi/turbo decoder 24, and is stored in the frame buffer 26.

Thus, in accordance with this embodiment, the soft decision (soft redecision) mapping table is inserted after the frame delay means (the second deinterleaver 20), so that the optimum mapping table decided from the reception status can be set, and as a result, the decoding gains can be improved.

Further, the soft decision device can dynamically switch the mapping table set in advance from the CPU or the like for each type of decoder at the output location. Therefore, the optimum mapping table for the decoding algorithm can be set.

As described above, in accordance with this embodiment, by using the plurality of soft decision means, the decoding gains produced by the effective soft decision are improved, while maintaining the compact size of the device.

Note that the number of soft decision devices is not limited to 2 as described above. Further, if the frame delay means is arranged before the soft decision device, the place where the soft decision device is arranged is not particularly limited, but is before the error correction circuit.

Descriptions are made in detail above of the CDMA receiver and the error correction code symbol soft decision method according to the present invention. However, the present invention is not limited to the above-mentioned embodiment, and various improvements and modifications can be made without departing from the scope of the main gist of the present invention.

### INDUSTRIAL APPLICABILITY

In accordance with the present invention as described above, by providing the CDMA receiver with the plurality of types of soft decision means, the decoding gains produced by the effective soft decision can be improved, while maintaining the compact size of the device.

## Claims

1. A CDMA receiver for performing de-spreading of a signal received via multi-paths and performing error correction on demodulated symbol data combined from receive symbols from each path, comprising:
reception status detection means for detecting a reception status based on the demodulated symbol data;
frame delay means for delaying the demodulated symbol data; and
a plurality of types of soft decision means for setting an optimum mapping table for the detected reception status and performing symbol soft decisions on the demodulated symbol data.

2. A CDMA receiver according to claim 1, wherein at least one of the soft decision means is provided before and after the frame delay means respectively, and the demodulated symbol data after soft-decided and delayed is soft decided again.

3. A CDMA receiver according to claim 1 or 2, wherein the reception status detection means is dynamic range detection means for detecting a dynamic range of the demodulated symbol data.

4. A CDMA receiver according to claim 3, wherein the reception status detection means detects the dynamic range per frame unit of the demodulated symbol data, and detects distribution per frame unit of the receive symbol data.

5. A CDMA receiver according to claim 4, wherein the soft decision means sets the optimum mapping table for the reception status decided based on the detected distribution of the receive symbol data.

6. An error correction code symbol soft decision method used in a CDMA receiver, comprising:
performing a symbol soft decision on demodulated symbol data obtained by a RAKE combination of multi-paths, and detecting a reception status based on the demodulated symbol data; and
delaying the demodulated symbol data after subjected to the symbol soft decision, and also setting an optimum mapping table based on the detection result, and performing the symbol soft decision again on the demodulated symbol data after delayed and subjected to the symbol soft decision.

7. An error correction code symbol soft decision method according to claim 6, wherein the detection of the reception status is performed by detecting a dynamic range of the demodulated symbol data.

8. An error correction code symbol soft decision method according to claim 7, wherein the detection of the reception status is performed by detecting the dynamic range per frame unit of the demodulated symbol data and detecting distribution per frame unit of the receive symbol data.

9. An error correction code symbol soft decision method according to claim 8, wherein the optimum mapping table is set based on the reception status decided based on the detected distribution of the receive symbol data.
